# EUROPÄISCHE PATENTSCHRIFT

(11) **EP 0 339 490 B1**
(45) Veröffentlichungstag und Bekanntmachung des Hinweises auf die Patenterteilung: **19.07.1995**
(21) Anmeldenummer: 89107117.7
(22) Anmeldetag: 20.04.1989
(51) Int. Cl.: B07B 1/24, B03B 9/06

(54) **Vorrichtung zum Sortieren von Bauschutt**
Device for sorting rubbish
Dispositif pour le tri de gravats

(30) Priorität: 29.04.1988 DE 8805674 U
(43) Veröffentlichungstag der Anmeldung: 02.11.1989
(73) Patentinhaber: Maschinenfabrik Magdeburg-Buckau GmbH, D-39104 Magdeburg (DE)
(72) Erfinder: Dederichs, Knut, D-2059 Bröthen (DE)
(74) Vertreter: Wilcken, Thomas, Dipl.-Ing.

(56) Entgegenhaltungen:
- EP-A- 0 173 934
- DE-U- 8 630 074
- FR-A- 1 300 408
- US-A- 1 343 292
- US-A- 2 173 314
- US-A- 3 144 939
- US-A- 4 018 675
- US-A- 4 043 901
- US-A- 4 098 685
- PATENT ABSTRACTS OF JAPAN vol. 3, no. 42 (M-55) 12 April 1979,& JP-A-54 19260 (NIPPON KOKAN KK) 13 Februar 1979,

## Beschreibung

Die Erfindung geht aus von einer Vorrichtung zum Sortieren von Bauschutt gemäß dem Oberbegriff des Patentanspruches 1. Eine derartige Vorrichtung ist in der EP-A-0 173 934 beschrieben.

Der anfallende Bauschutt muß heutzutage mehr und mehr sortiert werden, da er zum einen in steigendem Maße solche Stoffe enthält, die den Erdboden schädlich belasten und somit nur auf Sonderdeponien endgelagert werden können, und da zum anderen der zur Verfügung stehende Deponieraum begrenzt ist. Für den schädlichen Bauschuttanteil müssen auf den dafür vorgesehenen Sonderdeponien besondere und kostenaufwendige Sicherungsmaßnahmen vorgesehen werden, so daß der benötigte Deponieraum dementsprechend teuer ist. Die bisher bekannten Vorrichtungen zum Sortieren von Bauschutt bestehen im wesentlichen aus Förderbändern, an denen eine Mehrzahl von Personen arbeitet, um Anteile wie z. B. Kunststoffteile, Folienreste, Dämmaterialreste, Pappe und Papier, gewisse Eisenteile usw. von Hand aus dem geförderten Bauschuttmaterial auszusortieren. Durch den hohen Einsatz von Arbeitspersonal ist diese Arbeit umständlich, zeitaufwendig und teuer. Sie ist ferner auch körperlich anstrengend und in der Effektivität nicht zufriedenstellend, da z. B. größere Folien- und/oder Papierteile nicht unter großen Steinbrocken herausgezogen und sehr kleine Folien- und/oder Papierreste eben wegen ihrer sehr geringen Größe manuell nicht wirkungsvoll aussortiert werden können, um nur einige Probleme zu nennen. Die Folge davon ist eine relativ schlechte Sortiergüte, so daß das verbleibende Steinmaterial immer noch einen hohen Prozentsatz an unerwünschten Materialien enthält und somit für Deponien immer noch einen, wenn auch herabgesetzten Gefährlichkeitsgrad aufweist. Es ist klar, daß mit einer Sortierung nach der beschriebenen Art nur eine sehr begrenzte stündliche Sortierleistung möglich ist.

In der bereits genannten EP-P-0 173 934 ist eine stationäre, in einem ortsunveränderlichen Gebäude montierte Vorrichtung zum Sortieren von Bauschutt beschrieben, die eine rotierende Sortiertrommel mit beigeordneten äußeren Förderbändern aufweist. Diese Trommel weist in ihrem Inneren eine Siebanordnung unterschiedlicher Siebungsgröße auf, um eine Trennung von Schuttanteilen unterschiedlicher Teilchengröße zu bewirken. Anordnung und Aufbau der Siebanordnung sowie eine sonstige Innenausgestaltung der Siebtrommel sind dieser Druckschrift nicht zu entnehmen.

Die Aufgabe der Erfindung besteht in der Schaffung einer Vorrichtung zum Sortieren von Bauschuttmaterial, die es mit wenig Personaleinsatz ermöglicht, daß neben einer wesentlich gesteigerten Durchsatzleistung beim Sortieren des Bauschuttes eine erhöhte Menge an wiederverwendbarem Steinmaterial in ohne Nachbehandlung sofort wiederverwendbarer Form aus dem Bauschutt gewonnen wird und daß eine sehr hohe Sortiergüte erzielt wird, um soviel wie möglich an unerwünschtem Material auszusortieren.

Die Lösung dieser Aufgabe geht von einer Vorrichtung der einleitend angeführten Art aus und kennzeichent sich durch die Merkmale des Patentanspruches 1.

Durch diese Lösung ist es möglich, das in die Sortiertrommel eingeleitete Bauschuttmaterial mit hoher Sortiergüte zu trennen und dabei eine hohe Durchsatzleistung zu erzielen, und zwar insgesamt mit einem sehr geringen Personaleinsatz. In der Regel sind nicht mehr als zwei Personen erforderlich, die nur noch dasjenige Material von Hand aussortieren, das die Vorrichtung in der Regel wegen seiner Größe nicht durchlaufen kann oder nicht automatisch aussortiert wird. Dieser letzte Anteil ist allerdings sehr gering, so daß diese Arbeit von einer einzigen Person bewältigt werden kann.

Weitere Vorteile der erfindungsgemäßen Vorrichtung bestehen darin, daß wertvoller Deponieraum und Deponiekosten eingespart werden, weil ein viel größerer Anteil als bisher an wiederverwendbarem Material zurückgewonnen wird und daher nicht deponiert werden muß. Außerdem ist der wiederverwendbare Anteil gleichzeitig in gewissem Umfang klassiert, z. B. in Steinmaterial und Sandmaterial. Beide Materialsorten können dann wieder beispielsweise im Bauwesen verwendet werden; so kann das Steinmaterial z. B. im Straßenbau als Unterfütterung dienen.

Ferner wird das Steinmaterial in der Trommel durch Ausnutzung des freien Falls weiter zerkleinert, so daß es für seine später gedachte Verwendung keiner oder nur einer verhältnismäßig geringfügigen Nachbehandlung bedarf. Eine Staubbelästigung durch die im Inneren der Trommel ablaufenden Vorgänge ist nicht gegeben, da der Staub auch mittels des Absaugrohres entfernt und abgefangen wird, durch das hindurch Papier- und Folienreste sowie andere absaugfähige Anteile aus der Trommel abgesaugt werden. Die erfindungsgemäße Vorrichtung ist ferner robust und kompakt aufgebaut und gewährleistet eine sichere und zuverlässige Funktion.

Bevorzugte Ausgestaltungen der Erfindung sind in den Unteransprüchen angegeben.

Die Erfindung ist nachstehend anhand eines in den anliegenden Zeichnungen dargestellten Ausführungsbeispieles näher erläutert. Es zeigen:
- Fig. 1: eine Seitenansicht des Ausführungsbeispieles,
- Fig. 2: eine Aufsicht auf das Ausführungsbeispiel nach Fig. 1,
- Fig. 3: einen Axialschnitt durch eine Sortiertrommel,
- Fig. 4: eine Aufsicht auf eine Einzelheit nach Fig. 3,
- Fig. 5: einen Schnitt nach der Linie V-V in Figur 4,
- Fig. 6-11: Abänderungen des Ausführungsbeispieles.

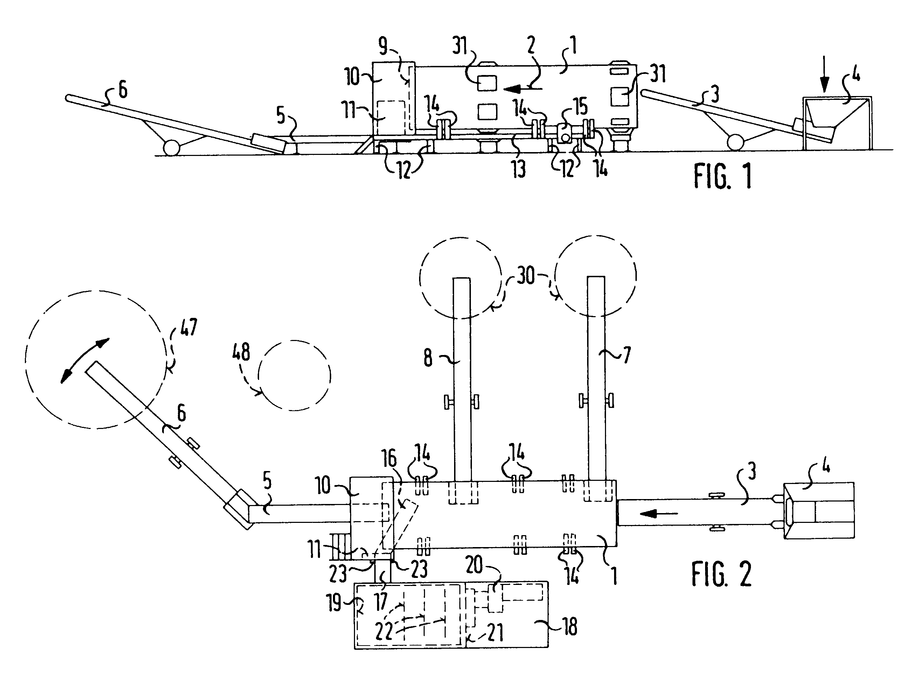

Nach den Figuren 1 und 2 ist einer drehantreibbaren Sortiertrommel 1, die im wesentlichen horizontal gelagert und vorzugsweise in Förderrichtung gemäß dem Pfeil 2 leicht nach unten geneigt ist, ein Aufgabeförderband 3 mit einem Aufgabetrichter 4 an ihrem einen Ende stirnseitig vorgeordnet und zwei in Reihe hintereinander liegende Abförderer 5 und 6 an ihrem anderen Ende stirnseitig nachgeordnet. Des weiteren sind der Trommel 1 wenigstens zwei weitere, parallel zu- und mit Abstand voneinander angeordnete, radial ableitende Abförderer 7 und 8 zugeordnet. Die Förderer 3, 5, 6, 7 und 8 sowie der Aufgabetrichter 4 sind von bekannter Bauart und werden daher nicht näher erläutert. An das axiale Auslaßende 9 der Sortiertrommel 1 schließt sich ein Kontrollhaus 10 an, in dem ein Steuerschaltschrank 11 vorgesehen ist, von dem aus alle wesentlichen Betriebsvorgänge aller mitwirkenden Einrichtungen elektrisch gesteuert werden.

Die Sortiertrommel 1 und das Kontrollhaus 10 sind auf einem rechteckigen, auf Füßen 12 stehenden Grundrahmen 13 gelagert, und zwar vorzugsweise unter Verwendung von luftbereiften Laufrädern 14, die paarweise auf jeder Längsseite des Rahmens 13 und an diesem gelagert sind. Im gezeigten Fall sind auf jeder Seite drei Radpaare vorgesehen. Durch die Verwendung der luftbereiften Laufräder 14 wird eine stoßgedämpfte Lagerung der Siebtrommel 1 erreicht. Einige der Laufräder werden durch einen Getriebemotor 15 angetrieben, wie dies in Figur 1 erkennbar ist. Da sich die Trommel 1 auf den Laufrädern 12 abstützt, bewirken die angetriebenen Laufräder eine Umdrehung der Trommel.

In das Auslaßende 9 der Siebtrommel 1 erstreckt sich ein Absaugrohr 16 hinein, das ferner das Kontrollhaus 10 durchquert und in einen äußeren Anschlußstutzen 17 des Kontrollhauses übergeht. Der Stutzen 17 ist wiederum mit einem Nebengehäuse 18 verbunden, in dem sich ein herausnehmbarer Sammelbehälter 19 und eine Gebläseeinrichtung 20 zur Erzeugung eines Absaugluftstromes befinden, welch letzterer an einer Querwand 21 des Gehäuses 18 montiert ist. In dem Gehäuse 18 befinden sich weiter Abfangmittel 22 üblicher Art, um zu sichern, daß die durch Absaugung aus der Siebtrommel 1 in das Gehäuse 18 gelangten Materialien in den Sammelbehälter 19 fallen und die nachfolgende Gebläseeinrichtung 20 nicht verstopfen.

Das Absaugrohr 16 weist in seinem Abschnitt 17 außerhalb des Kontrollhauses 10 mehrere, um den Umfang verteilte Sprühdüsen 23 auf. An diese Düsen ist eine Hochdruckpumpeneinrichtung (nicht gezeigt) anschließbar, um im Bedarfsfall Wasser in den Abschnitt 17 zu sprühen, um dadurch eine Staubentwicklung in dem Gehäuse 18 zu vermeiden. Der Staub würde sonst über die Gebläseeinrichtung 20 ins Freie gelangen.

Die im Querschnitt runde Siebtrommel 1, die einen Durchmesser von etwa 2,0 bis 2,5 Metern und eine Länge von etwa 8,0 Metern hat, weist in ihrer Vorderwand 24 einen axialen Materialeinlaß 25 auf und ist an ihrem anderen Ende, dem Auslaßende 9, völlig offen. In der Umfangswand 26 der Trommel 1 ist eine Mehrzahl von radial wirksamen Materialauslässen 27 und 28 vorgesehen, wobei eine erste sich um den Umfang der Trommel 1 erstreckende Reihe 27 mit einigem axialen Abstand zur Vorderwand 24 und eine zweite sich um den Umfang der Trommel 1 erstreckende Reihe 28 mit einem erheblich größeren Abstand zur ersten Reihe vorgesehen ist, wobei sich diese zweite Reihe in der zweiten Längshälfte der Siebtrommel befindet.

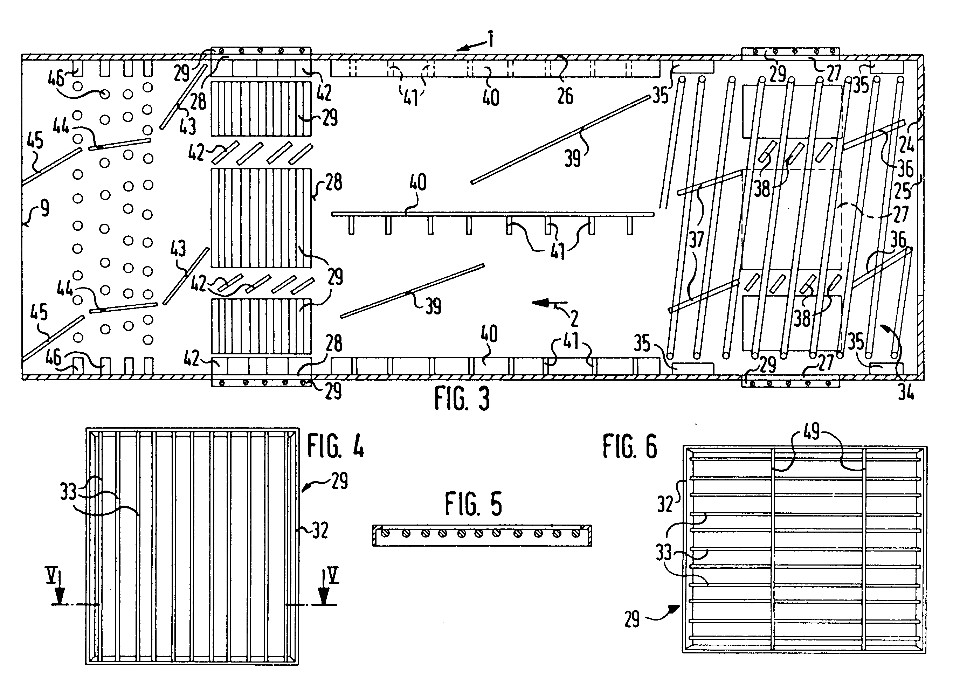

Die radialen Materialauslässe 27, 28 sind jeweils mit relativ feinwirkenden Sieben 29 versehen, um körnige Materialien, wie z.B. Sand und sandähnliches Material, aus der Siebtrommel zu entfernen. Das Material fällt dann auf die Abförderer 7 und 8 und wird dann durch diese auf eine vorläufige Halde 30 abgefördert. Jedes Sieb 29 ist mit einer Schutzhaube 31 (Figur 1) abgedeckt, wobei die Schutzhauben entgegen der Drehrichtung der Trommel 1 offen ausgebildet sind. In Figur 3 sind die Schutzhauben wegen der besseren Übersicht fortgelassen.

In den Figuren 4 und 5 ist ein Sieb 9 in größerem Maßstab gezeigt. Es besteht aus einem im wesentlichen rechteckigen Rahmen 32 aus Winkelprofilen und aus zueinander parallelen Stangen 33. Der Abstand der Stangen 33 voneinander wird durch die gewünschte Siebwirkung bzw. Korngröße bestimmt. Die Siebe 29 können alternativ auch als Maschensiebe ausgebildet sein.

Wie aus Figur 3 entnehmbar ist, weist die Siebtrommel 1 neben dem in dieser Figur nicht gezeigten Absaugrohr 11 in ihrem Innern eine Vielzahl von schematisch dargestellten Elementen aus Stahl zum Umwälzen, Zerkleinern, axialen Fördern und Trennen von in die Trommel eingeleitetem Bauschuttmaterial auf, die innenseitig an der Umfangswand 26 der Trommel 1 befestigt sind. Diese verschiedenartigen und mit Abstand voneinander angeordneten Elemente sind nachstehend im einzelnen näher erläutert.

Zunächst schließt sich an die Vorderwand 24 der Trommel 1 eine koaxial zur Trommellängsachse angeordnete, zylindrische Wendel 34 an, deren Abstand zur Umfangswand 26 etwa 10 bis 20 cm beträgt und deren Steigung so bemessen ist, daß außer sandförmigem Material auch gröberes Material zwischen den Windungen der Wendel hindurchfallen kann, während das übrige Material auf der Wendel verbleibt und mittels dieser in Richtung zum Auslaßende 9 der Trommel 1 transportiert wird. Die axiale Länge der mittels Verbindungsteilen 35 an der Umfangswand 26 befestigten Wendel 34 beträgt etwa 1,5 bis 2,5 Meter und nimmt somit etwa ein Viertel der Länge der Trommel 1 ein. Anstelle der zylindrischen Wendel kann auch eine konische Wendel verwendet werden, die sich in Materialtransportrichtung im Durchmesser leicht vergrößert.

Wie Figur 3 ferner zeigt, befindet sich die erste Siebreihe 27, 29 in der Trommelwand 26 etwa im Bereich der halben Länge der Wendel 34, so daß das durch die Wendel hindurchgefallene Material mittels der Siebe 29 noch einmal getrennt wird. Um zu sichern, daß der wesentliche Anteil des hindurchgefallenen Materials auch zu den Sieben gelangt, sind schrägverlaufende und radial nach innen vorstehende Leitbleche 36 an der Trommelwand 26 montiert. Weitere Leitbleche 37 der gleichen Bauart sorgen dafür, daß Material, das durch die Wendel 34, aber nicht durch die Siebe 29 der ersten Reihe gefallen ist, in axialer Richtung innerhalb der Trommel 1 transportiert wird. Hierzu sind auch zwischen den Sieben 29 kurze Leitbleche 38 vorgesehen.

In dem sich an die Wendel 34 anschließenden Längsabschnitt der Trommel 1 befinden sich weitere schräge Leitbleche 39, die eine größere Länge aufweisen als die Leitbleche 36, 37, ansonsten aber wie diese aufgebaut und umfangsmäßig angeordnet sind. Zwischen den Leitblechen 39 befinden sich axiale, noch längere Metallstreifen 40, die zu ihrer Stabilität mit Rippen 41 versehen sind. Diese Teile 40, 41 dienen im wesentlichen zum Zerkleinern von größeren und/oder wenig festen Materialstücken, indem sie nach Mitnahme durch die Streifen 40 infolge der Drehung der Trommel 1 von oben wieder herabfallen und dann auf die Streifen 40 und die Rippen 41 auftreffen und dadurch zerkleinert werden.

An den Abschnitt mit den Teilen 39, 40 wiederum schließt sich eine weitere Siebreihe 28, 29 an, die etwa am Beginn des letzten Drittels der Länge der Trommel 1 vorgesehen ist. Aufbau und Anordnung dieser zweiten Siebreihe gleicht der ersten Siebreihe 27, 29. Auch hier befinden sich kurze schräge Leitbleche 42 zwischen den Sieben 49.

An die zweite, sich umfangsmäßig erstreckende Siebreihe 28, 29 schließen sich wiederum noch weitere, unterschiedlich schräge Leitbleche 43, 44 und 45 an, die im wesentlichen eine Förderwirkung haben. Des weiteren sind in diesem Abschnitt in einer Umfangszone Stahlstäbe 46 vorgesehen, die ebenfalls zerkleinernde Wirkung haben und nach dem Prinzip der Teile 40, 41 arbeiten. Gewünschtenfalls können auch in dem mittleren, die Teile 39, 40, 41 aufweisenden Längsabschnitt der Trommel 1 Stahlstäbe 46 vorgesehen sein.

Es ist klar, daß auch die schrägverlaufenden Elemente bzw. Leitbleche neben ihrer Förderwirkung eine zerkleinernde Wirkung haben, wenn das durch Drehung der Trommel 1 mitgenommene Material von oben herunterfällt. Im übrigen arbeiten die schrägen Elemente nach dem Prinzip der Schneckenförderung.

Es wird nun die Funktion der vorstehend beschriebenen Vorrichtung erläutert.

Das angelieferte Bauschuttmaterial wird mittels eines Baggers in den Trichter 4 gegeben, der vorzugsweise mit einer (nicht dargestellten) Rütteleinrichtung versehen ist, um das unsortierte Material auf den Zuförderer 3 aufzugeben. Hierbei können bereits mit dem Baggergreifer zerkleinernde Stöße auf das Material im Trichter ausgeübt werden. Gleichzeitig sortiert der Baggerfahrer mit Hilfe des Greifers große Holzteile wie Balken oder dergleichen aus. Der Zuförderer 3 fördert das Material über den Einlaß 25 in die Trommel 1, wo es auf die Wendel 34 fällt. Da sich die Trommel dreht, beginnt hier bereits ein Trennvorgang, und zwar fällt kleines und sandähnliches Material radial durch die Wendel 34 hindurch und gelangt dann zu den Sieben 29, mit deren Hilfe es weiter gesiebt wird. Während das durch die Siebe 29 hindurchgefallene Material mittels des ersten Radialförderers 27 zur Halde 30 abgefördert wird, gelangt sowohl das zurückgebliebene Material mittels der Leitbleche 37 und das in der Wendel verbliebene Material mit Hilfe der Wendelwindungen weiter in das Innere der Trommel 1. Die Verstopfung der Siebe 29 wird durch die Drehung der Trommel 1 verhindert, weil zurückgehaltenes Material von den jeweils oben befindlichen Sieben wieder herabfällt.

Während innerhalb der Wendel 34 auch schon eine gewisse Vorzerkleinerung von wenig festem Material erfolgt ist, findet nun im mittleren Abschnitt der Trommel ein wesentlicher Zerkleinerungsvorgang statt. Insbesondere die Bauteile 40, aber auch die Leitbleche 39, nehmen das zu ihnen gelangte Material aufgrund der Drehung der Trommel 1 mit, so daß das Material im freien Fall wieder auf diese Bauteile und Leitbleche auftrifft und dadurch weiter zerstört wird. Des weiteren wird das Material aber auch aufgelockert und in axialer Richtung zum Auslaßende 9 der Trommel 1 gefördert. Es gelangt auf diese Weise zu der zweiten Siebreihe 28, 29, wo wiederum diese kleinen Anteile durch die Siebe 29 radial nach außen gelangen, und zwar auf das zweite Radialförderband 8 fallen, mit dessen Hilfe es dann auf die zweite vorläufige Halde 30 abgefördert wird. Die weiteren kurzen und schrägen Leitbleche 42 sorgen dafür, daß das nicht gesiebte Material in den letzten Abschnitt der Trommel 1 gelangt, wo sich die restlichen schrägen Leitbleche 43, 44 und 45 befinden.

In diesen letzten Abschnitt der Trommel 1 ragt auch das Absaugrohr 16 hinein, wie aus Figur 2 ersichtlich ist. Mit Hilfe dieses Absaugrohres werden nun alle Teile aus dem Bauschuttmaterial im Innern der Trommel abgesaugt, die wesentlich leichter im spezifischen Gewicht sind. Es handelt sich hierbei im wesentlichen um die Anteile aus Papier, Pappe, und Folienmaterial. Soweit diese Anteile eine bestimmte Größe nicht überschreiten, werden sie sämtlich über das Absaugrohr 16 abgesaugt und gelangen in den Sammelbehälter 19, wobei mittels der Abfangteile 22 gesichert ist, daß diese Anteile nicht die Wirkung der Sauggebläseeinrichtung 20 behindern.

Die Stahlstäbe 46 in der Ringzone der Trommel 1 bewirken in Zusammenwirkung mit den schrägen Leitblechen 44 eine weitere Zerkleinerung des steinartigen Anteils des Bauschuttmaterials. Schließlich bewirken die letzten Leitbleche 45 ein Austragen des zerkleinerten und im wesentlichen nur noch aus Steinbrocken von einer bestimmten Größe ab bestehenden Materials aus der Trommel 1. Diese Steinbrocken gelangen zusammen mit z.B. großen Papiersäcken und ggf. vorhandenen Eisenteilen auf das erste Abförderband 5, wo eine weitere Person die großen Säcke, Papier und Folienanteile sowie Eisenteile aussortiert. Das jetzt nur noch vorhandene Steinmaterial gelangt dann auf den letzten Abförderer 6, der es auf eine Steinhalde 47 abfördert. Aus der vorstehenden Erläuterung ergibt sich, daß sämtliches Material, das nicht auf die Halden 30 und 47 gelangt ist, sich im wesentlichen in dem Sammelbehälter 19 und ansonsten, was die großen Papier- und Folienanteile angeht, auf einem Nebenplatz 48 befindet. Die Sortiergüte der vorstehend beschriebenen Vorrichtung ist außerordentlich hoch, so daß der nicht wiederverwendbare Anteil sicher heraussortiert ist. Im wesentlichen ist es nur noch der Inhalt des Sammelbehälters, der auf eine Sonderdeponie gegeben werden muß.

In einer Weitergestaltung können auch weitere Wendeln 34 vorgesehen sein. So kann eine der weiteren Wendeln über der zweiten Siebreihe 28,29 mit gewissem radialem Abstand dazu angeordnet sein (nicht gezeigt).

In Figur 6 ist eine geänderte Bau- und Anordnungsweise der Siebe 29 gezeigt. Anstatt daß, wie in den Figuren 3 und 4 dargestellt ist, die Stangen 33 in Umfangsrichtung der Trommel verlaufen, sind die Siebe so angeordnet, daß deren Stangen 33 parallel zur Drehachse der Trommel 1 verlaufen. Außerdem sind die Stangen 33 in Querstreben 49 des Rahmens 32 sehr lose mit viel radialem Spiel gelagert. Auch ist ein großes axiales Spiel für die Stangen vorgesehen. Die Stangen selbst sind aus auf ihrer Oberfläche profilierten Baustahlstäben hergestellt, die allgemein bekannt sind und vorspringende Rippen aufweisen. Die Stangen der so konzipierten Siebe sind im Betrieb der Trommel 1 ständig in Bewegung und rütteln sich somit immer wieder frei, wenn sich zwischen ihnen Austragmaterial festgesetzt haben sollte.

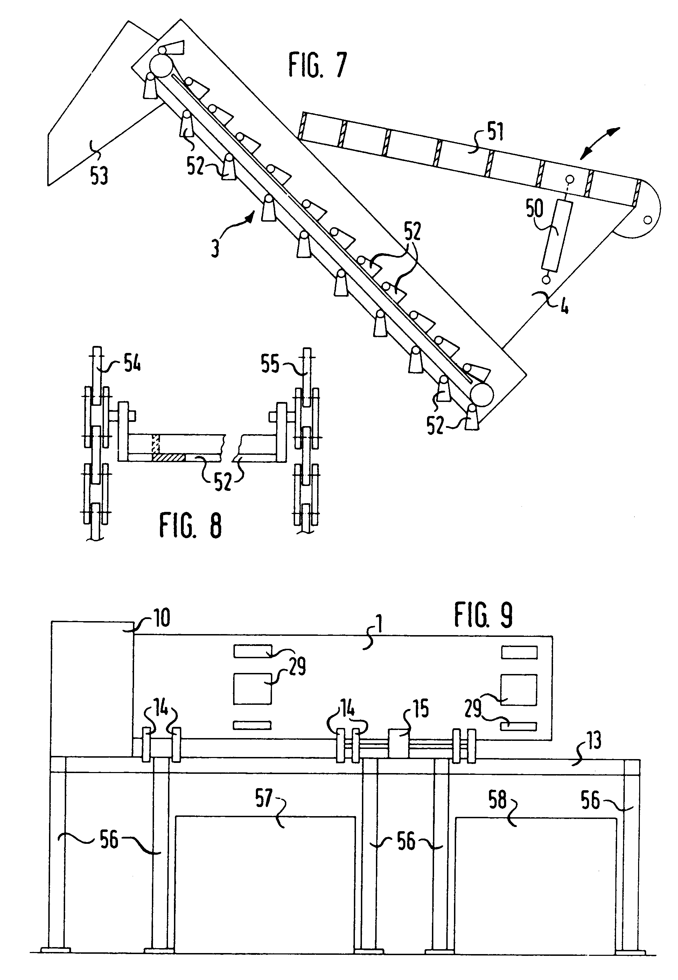

Figur 7 zeigt eine Beschickeinrichtung 3,4 für die Trommel 1. Um mit der Trommel nicht sortierfähige Bestandteile des Bauschutts, z.B. Balkenreste, vorab zu entfernen, ist der Aufgabetrichter 4 an seinem Oberende mit einem durch einen Hydraulikzylinder 50 verschwenkbaren Grobrost 51 versehen. Der Zylinder 50 kann über Funk fernbedient werden, wenn die auf dem Rost 51 liegenden Teile durch Verschwenkung des Rostes davon entfernt werden sollen.

Desweiteren ist der Endlosförderer 3 als Rakel- oder Schrappförderer ausgebildet. Hierzu weist er eine Vielzahl von verschwenkbaren Rakel- oder Schrappelementen 52 auf, die für einen gleichmäßigen Fördermassestrom auf dem Förderer sorgen, der über eine Schurre 53 in den Materialeinlaß 25 der Trommel 1 gelangt. Im Rücklauftrum des Förderers 3 verschwenken sich die Elemente 52 selbsttätig und reinigen sich dadurch selbst. Die verschwenkbare Anlenkung der Elemente 52 an zwei seitlichen Zugketten 54 und 55 ist in Figur 8 gezeigt.

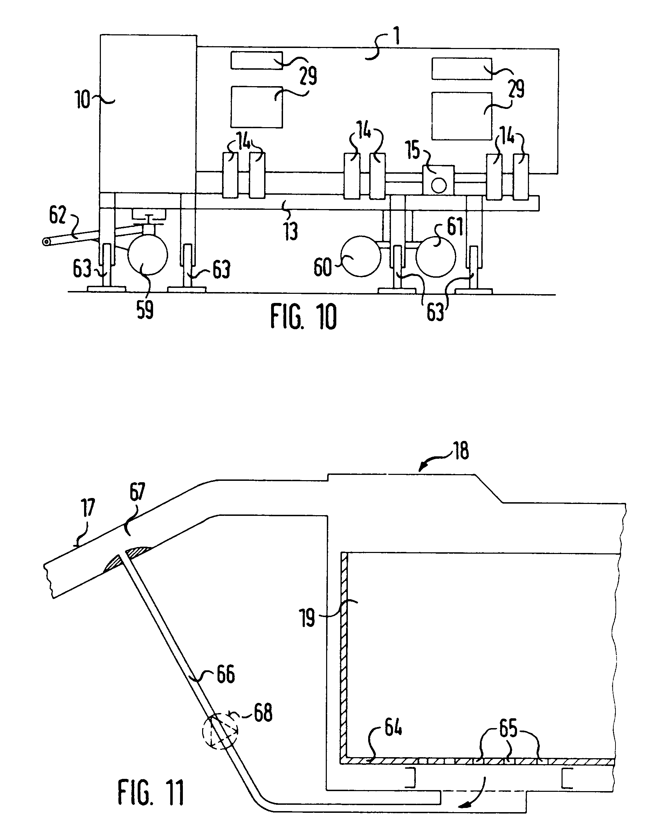

Figur 9 zeigt eine hochgestellte Trommel 1. Der Rahmen 13 steht auf hohen Beinen 56 derart, daß unterhalb des Rahmens im Bereich der Siebreihen 29 je eine Aufnahmebox 57 und 58 positionierbar ist, in die das aus den Sieben 29 austretende, feinkörnige Austragmaterial der Trommel hineinfällt. Die Boxen 57, 58 sind vorzugsweise als Entnahmeboxen gestaltet, so daß sie z.B. mit einem Schaufellader entladen werden können.

Figur 10 zeigt eine fahrbare Trommel 1. Der Grundrahmen 13 ist mit einer Rädereinrichtung aus mehreren Räderpaaren 59, 60 und 61 versehen, wobei das vordere Räderpaar 59 über eine Deichsel 62 lenkbar ist. Die Trommel kann an der Deichsel 62 gezogen werden und ist somit auf einfache Weise zu anderen Einsatzorten bringbar. Ferner ist der Grundrahmen mit mehreren aus- und einfahrbaren Hubstützen 63 versehen, so daß die Räderpaare während des Betriebes der Trommel 1 entlastet sind, wie aus Figur 10 zu entnehmen ist.

Figur 11 zeigt ein geändertes Nebengehäuse 18. Der Boden 64 des in diesem Gehäuse enthaltenen Sammelbehälters 19 ist mit einer Vielzahl von Wasserablauflöchern 65 versehen, so daß sich Überschußwasser, das aus dem in das Absaugrohr 17 eingesprühte Wasser zur Staubbindung resultiert, im Nebengehäuse 18 sammeln kann. Von hier gelangt dieses Wasser über eine Rücklaufleitung 66 und eine Venturidüsenausbildung 67 in dem Rohr 17 wieder zurück in das Absaugrohr. Durch diese Ausbildung wird überschüssiges Wasser in dem Sammelbehälter 19 vermieden und der Wasserverbrauch der Einsprühdüsen 23 herabgesetzt. Alternativ kann die Venturidüsenausbildung 67 auch entfallen und statt dessen eine Förderpumpe 68 in der Rückführleitung 66 vorhanden sein.

## Patentansprüche

1. Vorrichtung zum Sortieren von Bauschutt, der von übergroßen Holzteilen frei ist, mit einer im wesentlichen horizontal gelagerten, drehantreibbaren Sortiertrommel, die einen axialen Materialeinlaß an ihrem einen Ende und einen axialen Materialauslaß an ihrem anderen Ende und mehrere, mit sich mehrreihig um den Trommelumfang erstreckenden Sieben versehene, radiale Materialauslässe in ihrer Umfangswand aufweist, mit einem dem Materialeinlaß zugeordneten Zuförderer, mit wenigstens einem Abförderer, der wenigstens dem axialen Materialauslaß nachgeordnet ist, und mit einer an dem Auslaßende der Sortiertrommel vorgesehenen Absaugeinrichtung,
dadurch gekennzeichnet,
daß an der Innenseite der Umfangswand (26) der transportabel ausgebildeten Sortiertrommel (1) in Trommeldurchlaufrichtung in abwechselnder Reihenfolge vorgesehene, an sich bekannte verschiedenartige, voneinander beabstandete Elemente (36,37,38,39,42,43,44,45) zum Umwälzen, axialen Fördern und Trennen des Bauschutts und verschiedenartige, voneinander beabstandete Elemente (40,41,46) zum Zerkleinern des Bauschutts befestigt sind,
daß die Siebe (29) aus zueinander parallelen Stangen (33) bestehen, die aus auf ihrer Oberfläche profilierten Stahlstäben hergestellt und mit relativ großem radialem und axialem Spiel lose beweglich im Siebrahmen (32,49) gehaltert sind,
daß die erstgenannten Elemente eine sich an den axialen Materialeinlaß (25) der Trommel (1) anschließende, zusätzlich Grobsiebfunktion ausübende Förderwendel (34) umfassen, die sich über eine Teillänge der Trommel erstreckt, zur Umfangswand (26) der Trommel (1) einen radialen Abstand aufweist und eine erste Siebreibe (29) überdeckt,
daß in dem Zwischenraum zwischen der Förderwendel (34) und der Umfangswand (26) der Tromel (1) Förderelemente (36,37,38) vorgesehen sind,
und daß die Absaugeinrichtung (18) ein in den axialen Materialauslaß (9) der Trommel (1) hineinragendes Absaugrohr (16,17) zum Absaugen von leichten Abfallmaterialien aus der Trommel aufweist.

2. Vorrichtung nach Anspruch 1, dadurch gekennzeichnet, daß sich erste Zerkleinerungselemente (40,41) an die Förderwendel (34) anschließen, die aus radial nach innen vorstehenden, mit Rippen (41) versehenen, axialen Metallstreifen (40) bestehen.

3. Vorrichtung nach Anspruch 2, dadurch gekennzeichnet, daß die ersten Zerkleinerungselemente zusätzlich radial nach innen vorstehende, voneinander beabstandete Stahlstäbe (46) umfassen.

4. Vorrichtung nach Anspruch 1, 2 oder 3, dadurch gekennzeichnet, daß sich an eine zweite, den ersten Zerkleinerungselementen (40,41) folgende Siebreihe (28) eine Umfangszone der Trommelwand (26) mit zweiten Zerkleinerungselementen (46) aus voneinander beabstandeten, radialen Stahlstäben anschließt.

5. Vorrichtung nach Anspruch 1, dadurch gekennzeichnet, daß die Siebe (29) außerhalb der Trommel (1) je mit einer entgegen der Drehrichtung der Trommel offenen Schutzhaube (31) abgedeckt sind.

6. Vorrichtung nach Anspruch 1, dadurch gekennzeichnet, daß das Absaugrohr (16,17) der Absaugeinrichtung (18) an ein Nebengehäuse (18) angeschlossen ist, in dem sich ein Sammelbehälter (19) für das abgesaugte Leichtmaterial und eine Einrichtung (20) zur Erzeugung eines Absaugluftstromes befinden.

7. Vorrichtung nach Anspruch 6, dadurch gekennzeichnet, daß das Absaugrohr (16,17) mit Sprühdüsen (23) zum Binden von Staub versehen ist, daß im Boden des Sammelbehälters (19) Wasserablauflöcher (65) vorgesehen sind und daß eine vom Unterende des Nebengehäuses (18) abgehende und in das Absaugrohr (16,17) über eine Venturidüsenausbildung (67) einmündende Wasserrückführleitung (66) vorgesehen ist.

8. Vorrichtung nach Anspruch 1, dadurch gekennzeichnet, daß die Trommel (1) stoßgedämpft gelagert ist.

9. Vorrichtung nach Anspruch 8, dadurch gekennzeichnet, daß die Trommel (1) über luftbereifte und teilweise angetriebene Laufräder (14) in Umdrehung versetzbar abgestützt ist, die wiederum an einem die Trommel (1) tragenden Grundrahmen (13) gelagert sind.

10. Vorrichtung nach Anspruch 1, dadurch gekennzeichnet, daß der den Materialeinlaß (25) der Trommel (1) beschickende Zuförderer (3) aus einem Endlosförderer mit frei verschwenkbaren Förderrakeln (52) besteht und daß für diesen Förderer ein Aufgabetrichter mit einem kraftangetriebenen, verschwenkbaren, gegebenenfalls fernbedienbaren Grobrost (51) an seinem Oberende vorgesehen ist.

11. Vorrichtung nach Anspruch 10, dadurch gekennzeichnet, daß der Grundrahmen (13) auf hohen Beinen (56) steht und daß unterhalb der Trommel (1) im Bereich der Siebreiben (27,28,29) vorzugsweise als Entnahmeboxen ausgebildete Aufnahmeboxen (57,58) für das relativ feinkörnige Austragsmaterial vorgesehen sind.

12. Vorrichtung nach Anspruch 10, dadurch gekennzeichnet, daß der Grundrahmen (13) mit einer Rädereinrichtung (59,61,62) zur Erzielung der Mobilität der Vorrichtung und mit aus- und einfahrbaren Hubstüzen (63) zur Entlastung der Rädereinrichtung während des Betriebs der Vorrichtung versehen ist.

13. Vorrichtung nach Anspruch 1, dadurch gekennzeichnet, daß sich an das Auslaßende (9) der Trommel (1) ein Kontrollhaus (10) anschließt, das einen Steuerschaltschrank (11) zum Betrieb der Vorrichtung enthält, und daß sowohl die Trommel (1) als auch das Kontrollhaus (10) auf einem gemeinsamen Grundrahmen (13) gelagert sind.

## Claims

1. A device for sorting rubble, which is free of oversized pieces of wood, with a substantially horizontally mounted, rotatably drivable sorting drum, which has an axial material inlet at one end and an axial material outlet at its other end and several radial material outlets in its circumferential wall, which are provided with screens extending in several rows around the circumference of the drum, with a feed conveyor associated with the material inlet, with at least one removal conveyor, which is disposed after at least the axial material outlet, and with a suction arrangement provided at the outlet end of the sorting drum,
characterised in that
on the inner side of the circumferential wall (26) of the sorting drum (1), which is constructed so as to be transportable, various elements (36,37,38,39,42,43,44,45) are secured, which are known per se, are spaced apart from each other and are provided in alternating sequence in the passage direction of the drum, for the rolling, axial conveying and separating of the rubble, and various elements (40,41,46), spaced apart from each other, to comminute the rubble,
that the screens (29) consist of bars (33) parallel to each other, which are produced from steel rods profiled on their surface and are held so as to be loosely movable with a relatively large radial and axial play in the screen frame (32,49),
that the aforementioned elements comprise a conveyor coil (34) adjoining the axial material inlet (25) of the drum (1) and additionally carrying out a coarse screen function, which extends over a partial length of the drum, has a radial distance from the circumferential wall (26) of the drum (1) and covers a first row of screens (29),
that conveyor elements (36,37,38) are provided in the intermediate space between the conveyor coil (34) and the circumferential wall (26) of the drum,
and that the suction arrangement (18) has a suction pipe (16,17) projecting into the axial material outlet (9) of the drum (1) to suck light waste material out of the drum.

2. A device according to Claim 1, characterised in that first comminution elements (40,41) adjoin the conveyor coil (34), which consist of axial metal strips (40) projecting radially inwards and provided with ribs (41).

3. A device according to Claim 2, characterised in that the first comminution elements additionally comprise steel rods (46) projecting radially inwards and spaced apart from each other.

4. A device according to Claim 1, 2 or 3, characterised in that adjoining a second row of screens (28) following the first comminution elements (40,41) is a circumferential zone of the drum wall (26) with second comminution elements (46) of radial steel rods spaced apart from each other.

5. A device according to Claim 1, characterised in that the screens (29) outside the drum (1) are each covered with a protective cover (31) which is open towards the direction of rotation of the drum.

6. A device according to Claim 1, characterised in that the suction pipe (16,17) of the suction arrangement (18) is connected to an auxiliary housing (18), in which there is a collecting vessel (19) for the sucked out light material and an arrangement (20) to produce a stream of suction air.

7. A device according to Claim 6, characterised in that the suction pipe (16,17) is provided with spray nozzles (23) for the engaging of dust, that in the base of the collecting vessel (19) water outlet holes (65) are provided and that a water return line (66) is provided, starting from the lower end of the auxiliary housing (18) and opening into the suction pipe (16,17) via a venturi nozzle construction (67).

8. A device according to Claim 1, characterised in that the drum (1) is mounted so as to be shock-absorbed.

9. A device according to Claim 8, characterised in that the drum (1) is supported so as to be set in rotation via runner wheels (14) having pneumatic tyres and being partially driven, which in turn are mounted on a base frame (13) carrying the drum (1).

10. A device according to Claim 1, characterised in that the feed conveyor (3) charging the material inlet (25) of the drum (1) consists of an endless conveyor with conveyor blades (52) which are able to be freely swivelled, and that for this conveyor a feed hopper is provided, having at its upper end a power-driven coarse grid (51) which is able to be swivelled and, if necessary, is able to be remote-controlled.

11. A device according to Claim 10, characterised in that the base frame (13) stands on tall legs (56) and that beneath the drum (1) in the region of the rows of screens (27,28,29) receiving boxes (57,58), preferably constructed as removal boxes, are provided for the relatively fine-grained discharge material.

12. A device according to Claim 10, characterised in that the base frame (13) is provided with a wheel arrangement (59,61,62) to achieve the mobility of the device and with lifting supports (63), able to be extended and retracted, to relieve the load of the wheel arrangement during the operation of the device.

13. A device according to Claim 1, characterised in that a monitoring housing (10) adjoins the outlet end (9) of the drum (1), which monitoring housing (10) contains a control switchgear (11) to operate the device, and that both the drum (1) and also the monitoring housing (10)are mounted on a common base frame (13).

## Revendications

1. Dispositif pour le tri de gravats qui sont exempts de fragments de bois de taille excessive, comportant un tambour de tri logé dans une position essentiellement horizontale et susceptible d'être entraîné en rotation, qui présente une entrée axiale pour les matériaux à l'une de ses extrémités et une sortie axiale pour les matériaux à son autre extrémité, et plusieurs sorties radiales pour les matériaux, dans sa paroi périphérique, pourvues de tamis s'étendant en plusieurs rangées sur le pourtour du tambour, comportant un transporteur d'amenée associé à l'entrée pour les matériaux, au moins un transporteur d'évacuation, qui est agencé au moins en aval de la sortie axiale pour les matériaux, et comportant un dispositif d'aspiration prévu à l'extrémité de sortie du tambour de tri,
caractérisé
en ce qu'au côté intérieur de la paroi périphérique (26) du tambour de tri (1) conçu transportable, sont fixés des éléments (36, 37, 38, 39, 42, 43, 44, 45) de nature différente, connus en soi, distants les uns des autres et disposés en succession et en alternance dans la direction de traversée du tambour, pour brasser, transporter axialement et séparer les gravats, et des éléments (40, 41, 46) de nature différente, distants les uns des autres, pour concasser les gravats,
en ce que les tamis (29) sont constitués de tiges (33), parallèles entre elles, qui sont produites à partir de barreaux d'acier profilés à leur surface et sont maintenues de façon lâche et mobiles dans le châssis de tamis (32, 49), avec un jeu radial et axial relativement important,
en ce que les éléments mentionnés en premier comprennent une hélice transporteuse (34) se raccordant à l'entrée axiale (25) pour les matériaux du tambour (1), exerçant additionnellement une fonction de tamisage grossier, qui s'étend sur une partie de la longueur du tambour, présente un écartement radial vis-à-vis de la paroi périphérique (26) du tambour (1) et couvre une première rangée de tamis (29),
en ce que, dans l'espace intermédiaire entre l'hélice transporteuse (34) et la paroi périphérique (26) du tambour (1), sont prévus des éléments transporteurs (36, 37, 38),
et en ce que le dispositif d'aspiration (18) présente un tube d'aspiration (16, 17) faisant saillie dans la sortie axiale (9) pour les matériaux du tambour (1), en vue de l'extraction par aspiration de matériaux de déchet légers hors du tambour.

2. Dispositif selon la revendication 1, caractérisé en ce que, à l'hélice transporteuse (34) se raccordent des premiers éléments de concassage (40, 41), qui sont constitués par des bandes métalliques axiales (40) saillant radialement vers l'intérieur et pourvues de nervures (41).

3. Dispositif selon la revendication 2, caractérisé en ce que les premiers éléments de concassage comprennent en plus des barreaux d'acier (46) saillant radialement vers l'intérieur espacées les uns des autres.

4. Dispositif selon la revendication 1, 2 ou 3, caractérisé en ce que, à une deuxième rangée de tamis (28), qui fait suite aux premiers éléments de concassage (40, 41), se rattache une zone périphérique de la paroi (26) du tambour comportant des deuxièmes éléments de concassage (46), constitués de barreaux d'acier radiaux, espacés les uns des autres.

5. Dispositif selon la revendication 1, caractérisé en ce que les tamis (29) sont, à l'extérieur du tambour (1), recouverts chacun d'un capot protecteur (31) ouvert à l'opposé du sens de rotation du tambour.

6. Dispositif selon la revendication 1, caractérisé en ce que le tube d'aspiration (16, 17) du dispositif d'aspiration (18) est raccordé à un caisson latéral (18), dans lequel se trouvent un récipient collecteur (19) pour le matériau léger aspiré et un dispositif (20) pour engendrer un courant d'air d'aspiration.

7. Dispositif selon la revendication 6, caractérisé en ce que le tube d'aspiration (16, 17) est pourvu de buses de pulvérisation (23) pour lier la poussière, en ce que des trous d'évacuation d'eau (65) sont prévus dans le fond du récipient collecteur (19) et en ce qu'il est prévu un conduit de retour d'eau (66) partant de l'extrémité inférieure du caisson latéral (18) et débouchant dans le tube d'aspiration (16, 17) au travers d'une structure à buse de venturi (67).

8. Dispositif selon la revendication 1, caractérisé en ce que le tambour (1) est logé avec amortissement de chocs.

9. Dispositif selon la revendication 8, caractérisé en ce que le tambour (1) est supporté déplaçable en rotation au moyen de roues mobiles (14) munies de bandages pneumatiques et entraînées pour partie, qui sont pour leur part logées à un châssis de base (13) portant le tambour (1).

10. Dispositif selon la revendication 1, caractérisé en ce que le transporteur d'amenée (3), alimentant l'entrée (25) pour les matériaux du tambour (1), est constitué par un transporteur sans fin comportant des racloirs de transport (52) librement pivotants, et en ce que, pour ce transporteur, il est prévu une trémie de chargement avec, à son extrémité supérieure, une grille à grosses ouvertures (51) actionnée mécaniquement, pivotante, le cas échéant, pouvant être commandée à distance.

11. Dispositif selon la revendication 10, caractérisé en ce que le châssis de base (13) repose sur des pieds de grande hauteur (56), et en ce que, au-dessous du tambour (1), sont prévues, dans la région des rangées de tamis (27, 28, 29), des caisses de réception (57, 58), de préférence conçues sous forme de caisses de prélèvement, pour le matériau déchargé de granulométrie relativement fine.

12. Dispositif selon la revendication 10, caractérisé en ce que le châssis de base (13) est pourvu d'un agencement de roues (59, 61, 62) pour l'obtention de la mobilité du dispositif et de montants de soulèvement (63), déployables et rétractables, pour soulager l'agencement de roues pendant l'exploitation du dispositif.

13. Dispositif selon la revendication 1, caractérisé en ce qu'à l'extrémité de sortie (9) du tambour (1), se rattache une cabine de contrôle (10), qui renferme une armoire de commande et de commutation (11) pour l'exploitation du dispositif, et en ce que le tambour (1) aussi bien que la cabine de commande (10) sont logés sur un châssis de base commun (13).
